# EUROPEAN PATENT APPLICATION

(11) **EP 2 735 641 A1**
(43) Date of publication of application: **28.05.2014**
(21) Application number: 12194163.7
(22) Date of filing: 26.11.2012
(51) Int. Cl.: D06F 58/28

(54) **A method for controlling a laundry dryer including a fan-drum motor or fan motor with a variable speed**

(71) Applicant: Electrolux Home Products Corporation N.V., 1130 Brussel (BE)
(72) Inventor: Bison, Alberto, 33080 Porcia (PN) (IT); Cavarretta, Francesco, 33080 Porcia (PN) (IT); Vignocchi, Massimiliano, 33080 Porcia (PN) (IT); Ugel, Maurizio, 33080 Porcia (PN) (IT)
(74) Representative: Nardoni, Andrea

(57) **Abstract**

The present invention relates to a method for controlling a laundry dryer including a fan-drum motor (26) for driving both a drying air stream fan (18) and a laundry drum (12) with a variable speed (v) or a fan motor (36) for driving the drying air stream fan (18) with a variable speed (v) and a separate drum motor (40) for driving the laundry drum (12). Said method comprising the steps of setting a predetermined power course for the fan-drum motor (26) or the fan motor (36), respectively, and controlling the speed (v) of the fan-drum motor (26) or fan motor (36), so that the absorbed power (P) of the fan-drum motor (26) or fan motor (36), respectively, maintains the set power course. Further, the present invention relates to a corresponding laundry dryer.

## Description

The present invention relates to a method for controlling a laundry dryer including a fan-drum motor or fan motor with a variable speed. Further, the present invention relates to a laundry dryer including a drying air stream circuit with a drying air stream fan and a laundry drum.

The rotation speeds of the laundry drum and the drying air stream fan are typically adapted to a maximum amount of load inside the laundry drum. However, the real amount of load in the laundry drum is lower than the maximum amount of load in the most cases. The drying cycle is negatively affected, when the laundry drum contains a smaller amount of laundry. Therefore, it would be advantageous to adapt the drying cycle to the real amount of the laundry inside the laundry drum.

It is an object of the present invention to provide a method for controlling a laundry dryer and a corresponding laundry dryer, wherein the drying cycle is adapted to the real amount of the laundry inside the laundry drum.

The object of the present invention is achieved by the method according to claim 1.

According to the present invention the method is provided for controlling a laundry dryer including a fan-drum motor for driving both a drying air stream fan and a laundry drum with a variable speed or a fan motor for driving the drying air stream fan with a variable speed and a separate drum motor for driving the laundry drum, said method comprising the steps of:
- setting a predetermined power course for the fan-drum motor or the fan motor, respectively, and
- controlling the speed of the fan-drum motor or the fan motor, so that the absorbed power of the fan-drum motor or fan motor, respectively, maintains the set power course.

The main idea of the present invention is the adaption of the speed of the fan-drum motor or fan motor, respectively, to the amount of laundry inside the laundry drum, wherein the set power course is maintained. In the beginning, the predetermined power course for the fan-drum motor or the fan motor, respectively, is set irrespective of the amount of laundry in the laundry drum. The torque for moving the laundry drum containing a partial amount load (for example half load) is lower than the torque associated to maximum amount of load. It has been found that the speed of the fan-drum motor or the fan motor, respectively, increases with a decreasing load in the laundry drum of the laundry dryer. In practise when a predetermined power course is set and maintained, i.e. the motor is power controlled, the speed of the motor is variable as a function of the laundry amount introduced into the laundry drum by the user, the same power absorbed by the motor generates a higher rotational speed when the torque for moving the laundry drum is lower, which means a lower amount load (for example half load), whereas the same power absorbed by the motor generates a lower rotational speed when the torque for moving the laundry drum is higher, which means a higher amount load (for example full load).

In the case of a partial load in the laundry drum, the speed of the fan-drum motor or fan motor is higher than in the case of the maximum amount of load. The flow rate of a drying air stream for the partial load is higher than the flow rate of the drying air stream for the maximum amount of load. The higher rotation speed of the drying air stream fan reduces the drying time.

Preferably, the method is provided for a laundry dryer, wherein the fan-drum motor or the fan motor is an inverter motor.

In particular, the speed of the fan-drum motor or fan motor increases with the decreasing load inside the laundry drum of the laundry dryer.

Preferably, the predetermined power course of the fan-drum motor or the fan motor, respectively, depends on at least one selection made by a user.

Preferably, a maximum level for the speed of the fan-drum motor or fan motor, respectively, is defined.

For example, the maximum level for the speed of the fan-drum motor or fan motor, respectively, depends on the noise generated by the laundry dryer.

Further, the maximum level for the speed of the fan-drum motor or fan motor may depend on the flow rate or the drum speed generated by the fan-drum motor or fan motor.

The speed of the fan-drum motor or fan motor may oscillate around an average speed value, wherein said average speed value corresponds with the set power value.

In particular, the method is provided for a laundry dryer with a heat pump system, wherein a rotation speed or power of a compressor of said heat pump system is controlled in dependence of the speed of the fan-drum motor or fan motor, respectively.

Moreover, the rotation speed or power of the compressor may increase with an increasing speed of the fan-drum motor or fan motor, respectively.

The object of the present invention is further achieved by the laundry dryer according to claim 9.

According to the present invention the laundry dryer includes a drying air stream circuit with a drying air stream fan and a laundry drum, wherein:
- the laundry dryer comprises a fan-drum motor for driving both the drying air stream fan and the laundry drum or a fan motor for driving the drying air stream fan and a separate drum motor for driving the laundry drum,
- the laundry dryer comprises a control unit for controlling the speed of the fan-drum motor or the fan motor, respectively,
- a set or settable power course for the fan-drum motor or the fan motor, respectively, is defined,
- the control unit is provided for controlling the speed of the fan-drum motor or the fan motor, so that the absorbed power of the fan-drum motor or the fan motor, respectively, maintains the set power course.

In particular, the predetermined power course of the fan-drum motor or the fan motor, respectively, may depend on the drying cycle selected by the user at a control panel of the laundry dryer, according to the type of laundry to be dried, for example specific textile of the laundry or the predetermined power course my depends on the options selected by the user, for example anti-crease function. Further, the predetermined power course of the fan-drum motor or the fan motor, respectively, may depend on a predetermined energy consumption level selected by the user or automatically set by the control unit. Preferably, the control unit of the laundry dryer is programmed to set a predetermined power course of the fan-drum motor or the fan motor, respectively. The speed of the fan-drum motor or the fan motor, respectively, increases with a decreasing load inside a laundry drum.

Preferably, the fan-drum motor or the fan motor, respectively, is an inverter motor.

For example, the laundry dryer comprises a heat pump system, wherein a variable rotation speed and/or power of a compressor are controlled or controllable by the control unit.

According to another example, the laundry dryer comprises an air-to-air condenser providing a heat exchange between the drying air stream circuit and ambient air.

At last, the laundry dryer is provided for the method mentioned above.

The novel and inventive features believed to be the characteristic of the present invention are set forth in the appended claims.

The invention will be described in further detail with reference to the drawings, in which
- FIG 1: illustrates a schematic diagram of a laundry dryer with a heat pump system according to a first embodiment of the present invention,
- FIG 2: illustrates a schematic diagram of the laundry dryer with an air-to-air condenser according to a second embodiment of the present invention,
- FIG 3: illustrates a schematic diagram of a laundry dryer with the heat pump system according to a third embodiment of the present invention,
- FIG 4: illustrates a schematic diagram of the laundry dryer with the air-to-air condenser according to a fourth embodiment of the present invention,
- FIG 5: illustrates schematic diagrams of the speed and power of a fan-drum motor as functions of the time according to an example of the present invention,
- FIG 6: illustrates schematic diagrams of the speed and power of a fan-drum motor or a fan motor as functions of the time according to another example of the present invention, and
- FIG 7: illustrates schematic diagrams of the speed and power of the fan-drum motor or the fan motor as functions of the time according a further example of the present invention.

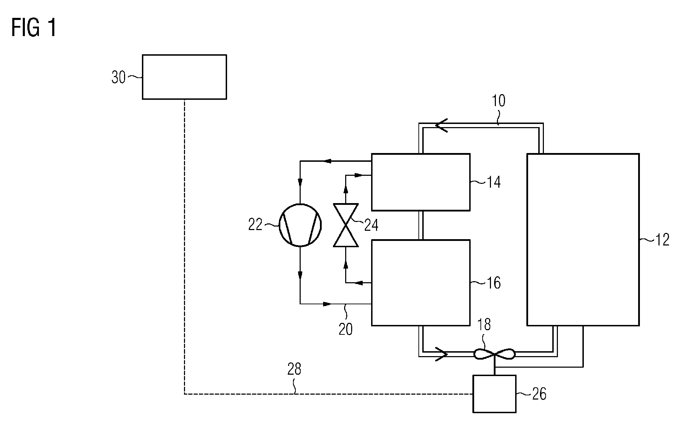

FIG 1 illustrates a schematic diagram of a laundry dryer with a heat pump system according to a first embodiment of the present invention.

The heat pump system comprises a drying air stream circuit 10, preferably a closed loop one, and a closed refrigerant circuit 20. The drying air stream circuit 10 is formed by a laundry drum 12, an evaporator 14, a condenser 16 and a drying air stream fan 18. The refrigerant circuit 20 is formed by a compressor 22, the condenser 16, an expansion device 24 and the evaporator 14. For example, the expansion device 24 is an expansion valve. The evaporator 14 and the condenser 16 are heat exchangers and form the thermal interconnections between the drying air stream circuit 10 and the refrigerant circuit 20.

In the drying air stream circuit 10, the evaporator 14 cools down and dehumidifies the drying air stream, after the warm and humid drying air stream has passed the laundry drum 12. Then, the condenser 16 heats up the drying air stream, before the drying air stream is re-inserted into the laundry drum 12 again. The drying air stream is driven by the drying air stream fan 18 arranged between the condenser 16 and the laundry drum 12. In the refrigerant circuit 20, a refrigerant is compressed and heated up by the compressor 22, cooled down and condensed in the condenser 16, expanded in the expansion device 24, vaporised and heated up in the evaporator 14.

The drying air stream fan 18 and the laundry drum 12 are driven by a fan-drum motor 26. The fan-drum motor 26 is controlled by a control unit 30. The fan-drum motor 26 is connected to the control unit 30 by a control line 28. Preferably, the fan-drum motor 26 is an inverter motor.

The fan-drum motor 26 is controlled at a predetermined power course P and the speed v of the fan-drum motor 26 varies in response to the torque needed to drive into rotate the laundry drum 12 based on the laundry amount in the laundry drum 12. The torque for moving the laundry drum 12 with a partial load is lower than the torque provided for a maximum amount of load. Accordingly, in the case of a partial load in the laundry drum 12, the speed v of the fan-drum motor 26 is higher than in the case of the maximum amount of load. The flow rate of the drying air stream in the air steam channel 10 for the partial load is higher than the flow rate of the drying air stream for the maximum amount of load. The higher rotation speed of the drying air stream fan 18 reduces the drying time. The rotation speed of the drying air stream fan 18 is proportional to the rotation speed of the laundry drum 12.

The laundry dryer with the heat pump system works in a more favourable condition due to the higher drying air stream caused by the higher rotation speed of the drying air stream fan 18. A higher drying air stream improves the heat exchange at the evaporator 14 and condenser 16 of the heat pump system. The improved heat exchange at the evaporator 14 and condenser 16 of the heat pump system leads to a decrease of the pressure difference between the pressure value of the refrigerant in the high pressure portion of the refrigerant circuit and the pressure value of the refrigerant in the low pressure portion of the refrigerant, which reduces the work of the compressor 22 and the energy consumption.

Moreover, the heat pump system can work in even more favourable conditions, e.g. a higher flow rate of the refrigerant, obtaining further improvements in terms of energy consumption. For example, the heat pump system includes a compressor 22 with a variable compressor speed. Preferably, the compressor speed is set according to the speed of the fan-drum motor 26.

For the safety of the fan-drum motor 26 and for a noise limit level, a maximum speed level may be defined for the fan-drum motor 26.

The fan-drum motor 26 can stop for short time intervals, e.g. two or three seconds, and possibly reverse the direction of the rotation.

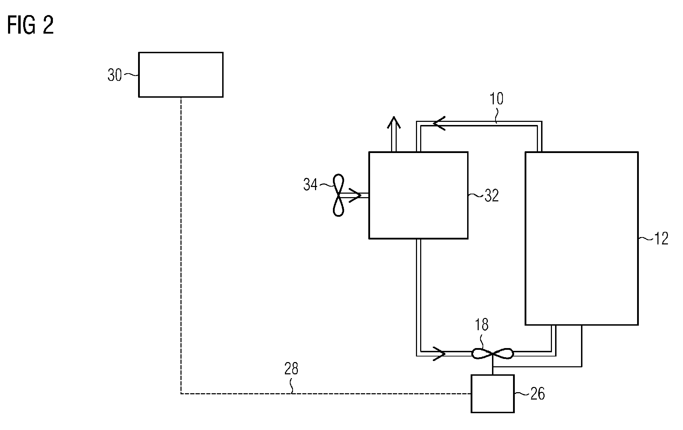

FIG 2 illustrates a schematic diagram of the laundry dryer with an air-to-air condenser 32 according to a second embodiment of the present invention.

The laundry dryer comprises the closed drying air stream circuit 10. The drying air stream circuit 10 of the second embodiment is formed by the laundry drum 12, the air-to-air condenser 32 and the drying air stream fan 18. The air-to-air condenser 32 corresponds with an ambient air fan 34. The air-to-air condenser 32 is an air-to-air heat exchanger and forms a thermal interconnection between the drying air stream circuit 10 and the ambient air. The air-to-air condenser 32 includes two separate channels. A first channel is provided for the drying air stream of the drying air stream circuit 10. A second channel is provided for the ambient air. The ambient air is blown through the second channel by the ambient air fan 34.

The air-to-air condenser 32 cools down and dehumidifies the drying air stream by ambient air, after the warm and humid drying air stream has passed the laundry drum 12. Then, the drying air stream is heated up by a heating device, for example by an electric heating element, before the drying air stream is re-inserted into the laundry drum 12 again. Said heating device is not shown. The drying air stream is driven by the drying air stream fan 18 arranged between the air-to air condenser 32 and the laundry drum 12.

The drying air stream fan 18 and the laundry drum 12 are driven by the fan-drum motor 26. The fan-drum motor 26 is controlled by the control unit 30. The fan-drum motor 26 is connected to the control unit 30 by the control line 28. Preferably, the fan-drum motor 26 is an inverter motor.

The fan-drum motor 26 is controlled at a predetermined power course P and the speed v of the fan-drum motor 26 varies in response to the torque needed to drive into rotate the laundry drum 12 based on the laundry amount in the laundry drum 12. The torque for moving the laundry drum 12 with a partial load is lower than the torque provided for a maximum amount of load. Accordingly, in the case of a partial load in the laundry drum 12, the speed v of the fan-drum motor 26 is higher than in the case of the maximum amount of load. The flow rate of the drying air stream in the air steam channel 10 for the partial load is higher than the flow rate of the drying air stream for the maximum amount of load. The higher rotation speed of the drying air stream fan 18 reduces the drying time. The rotation speed of the drying air stream fan 18 is proportional to the rotation speed of the laundry drum 12.

For the safety of the fan-drum motor 26 and for a noise limit level, a maximum speed level may be defined for the fan-drum motor 26.

The fan-drum motor 26 can stop for short time intervals, e.g. two or three seconds, and possibly reverse the direction of the rotation.

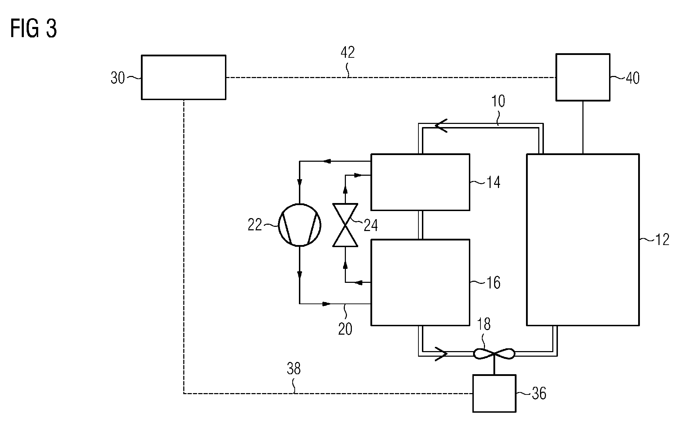

FIG 3 illustrates a schematic diagram of a laundry dryer with the heat pump system according to a third embodiment of the present invention.

The heat pump system comprises the drying air stream circuit 10 and the closed refrigerant circuit 20. The drying air stream circuit 10 is formed by the laundry drum 12, the evaporator 14, the condenser 16 and the drying air stream fan 18. The refrigerant circuit 20 is formed by the compressor 22, the condenser 16, the expansion device 24 and the evaporator 14. The expansion device 24 may be an expansion valve. The evaporator 14 and the condenser 16 are heat exchangers and form the thermal interconnections between the drying air stream circuit 10 and the refrigerant circuit 20.

In the drying air stream circuit 10, the evaporator 14 cools down and dehumidifies the drying air stream, after the warm and humid drying air stream has passed the laundry drum 12. Then, the condenser 16 heats up the drying air stream, before the drying air stream is re-inserted into the laundry drum 12 again. The drying air stream is driven by the drying air stream fan 18 arranged between the condenser 16 and the laundry drum 12. In the refrigerant circuit 20, a refrigerant is compressed and heated up by the compressor 22, cooled down and condensed in the condenser 16, expanded in the expansion device 24, vaporised and heated up in the evaporator 14.

The drying air stream fan 18 is driven by a fan motor 36. In a similar way, the laundry drum 12 is driven by a drum motor 40. The fan motor 36 and the drum motor 40 are controlled by the control unit 30. The fan motor 36 is connected to the control unit 30 by a fan control line 38. The drum motor 40 is connected to the control unit 30 by a drum control line 42. Preferably, the fan motor 36 is an inverter motor.

The fan motor 36 is set at a predetermined power course P, i.e. is power controlled. The speed v of the fan motor 36 varies in response to the load inside the laundry drum 12. In the case of partial load the pressure drops (i.e. the air flow resistance) in the drying air stream circuit 10 are smaller than the pressure drops in the case of the maximum amount of load. Therefore the speed v of the fan motor 36 for the partial load is higher than the speed v for the maximum amount of load in order to maintain the power P at the set value. The same power absorbed by fan motor 36 generates a higher speed v for the partial load (half load, for example) due to the lower air flow resistance inside the laundry drum 12 and the same power absorbed by fan motor 36 generates a lower speed v for the full load (or a greater load than the partial load) due to the greater air flow resistance inside the laundry drum 12. The flow rate of the drying air stream increases as well and allows a reduced drying time.

The laundry dryer with the heat pump system works in a more favourable condition due to the higher drying air stream caused by the higher rotation speed of the drying air stream fan 18. A higher drying air stream improves the heat exchange at the evaporator 14 and condenser 16 of the heat pump system. The improved heat exchange at the evaporator 14 and condenser 16 of the heat pump system leads to a decrease of the pressure difference between the pressure value of the refrigerant in the high pressure portion of the refrigerant circuit and the pressure value of the refrigerant in the low pressure portion of the refrigerant, which reduces the work of the compressor 22 and the energy consumption.

Further, the heat pump system can work in more favourable conditions, e.g. a higher flow rate of the refrigerant, obtaining further improvements in terms of energy consumption. In particular, the heat pump system includes a compressor 22 with a variable compressor speed. Preferably, the compressor speed is set according to the speed of the fan motor 36.

For the safety of the fan motor 36 and for the noise limit level, a maximum speed level may be defined for the fan motor 36.

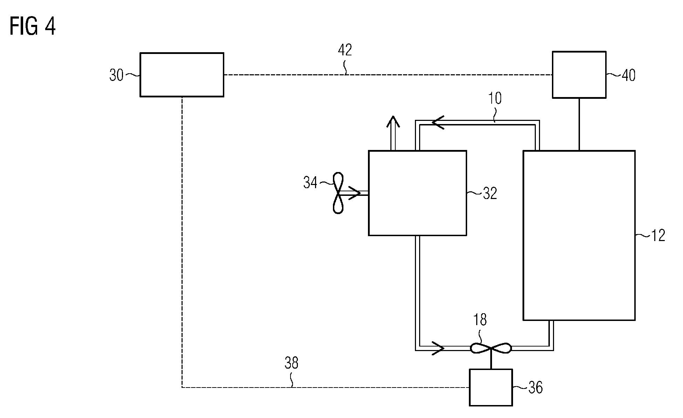

FIG 4 illustrates a schematic diagram of the laundry dryer with the air-to-air condenser 32 according to a fourth embodiment of the present invention.

The laundry dryer comprises the drying air stream circuit 10. The drying air stream circuit 10 of the fourth embodiment is formed by the laundry drum 12, the air-to-air condenser 32 and the drying air stream fan 18. The air-to-air condenser 32 comprises with an ambient air fan 34. The air-to-air condenser 32 is an air-to-air heat exchanger and forms the thermal interconnection between the drying air stream circuit 10 and the ambient air. The air-to-air condenser 32 includes two separate channels. The first channel is provided for the drying air stream of the drying air stream circuit 10. The second channel is provided for the ambient air. The ambient air is blown through the second channel by the ambient air fan 34.

The air-to-air condenser 32 cools down and dehumidifies the drying air stream by ambient air, after the warm and humid drying air stream has passed the laundry drum 12. Then, the drying air stream is heated up by the heating device, for example by an electric heating element, before the drying air stream is re-inserted into the laundry drum 12 again. Said heating device is not shown. The drying air stream is driven by the drying air stream fan 18 arranged between the air-to air condenser 32 and the laundry drum 12.

The drying air stream fan 18 is driven by the fan motor 36. The laundry drum 12 is driven by the drum motor 40. The fan motor 36 and the drum motor 40 are controlled by the control unit 30. The fan motor 36 is connected to the control unit 30 by the fan control line 38. In a similar way, the drum motor 40 is connected to the control unit 30 by the drum control line 42. Preferably, the fan motor 36 is an inverter motor.

The fan motor 36 is set at a predetermined power course P, i.e. is power controlled. The speed v of the fan motor 36 varies in response to the load inside the laundry drum 12. In the case of partial load the pressure drops, i.e. the air flow resistance, in the drying air stream circuit 10 are smaller than the pressure drops in the case of the maximum amount of load. Therefore, the same power absorbed by fan motor 36 generates a higher speed v for the partial load (half load, for example) due to the lower air flow resistance inside the laundry drum 12 and the same power absorbed by fan motor 36 generates a lower speed v for the full load (or a greater load than the partial load) due to the greater air flow resistance inside the laundry drum 12. The flow rate of the drying air stream increases as well and allows a reduced drying time.

For the safety of the fan motor 36 and for the noise limit level, a maximum speed level may be defined for the fan motor 36.

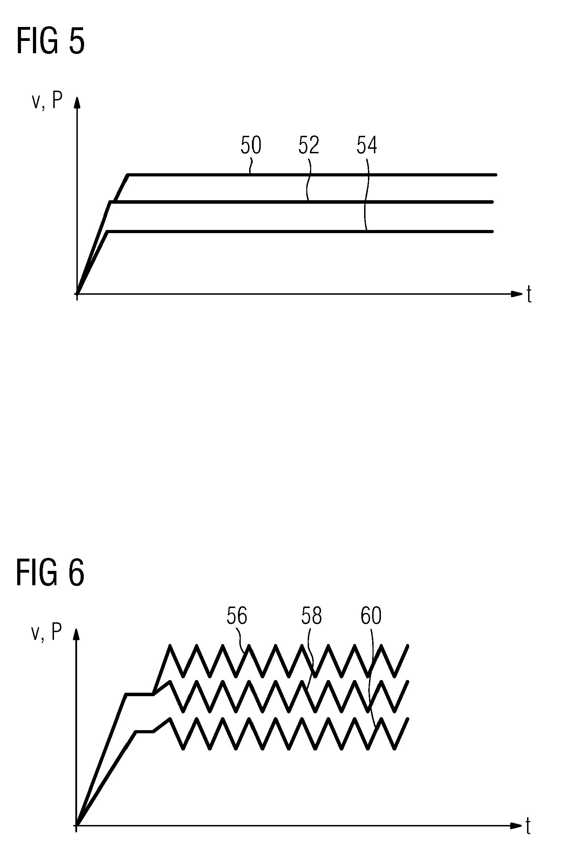

The following diagrams in FIG 5 to FIG 7 show examples of the speeds v and the power course P of the fan-drum motor 26 and of the fan motor 36, respectively, as functions of the time t.

FIG 5 illustrates schematic diagrams 50, 52 and 54 of the speed v and power course P of the fan-drum motor 26 or the fan motor 36 as functions of the time t according to a first example of the present invention.

The diagram 50 represents the speed v of the fan-drum motor 26 or the fan motor 36 in the case of half load. The diagram 52 represents the speed v of the fan-drum motor 26 or of fan motor 36in the case of the maximum amount of load. The diagram 54 represents the power course P of the fan-drum motor 26 or of the fan motor 36 set by the control unit 30 according, for example, to a selection made by the user.

FIG 6 illustrates schematic diagrams 56, 58 and 60 of the speed v and power course P of the fan-drum motor 26 or fan motor 36 as functions of the time t according to another example of the present invention.

The diagram 56 represents the speed v of the fan-drum motor 26 or fan motor 36 in the case of a small amount of load in the laundry drum 12. The diagram 58 represents the speed v of the fan-drum motor 26 or fan motor 36 in the case of a big amount of load in the laundry drum 12. The diagram 60 represents the power P of the fan-drum motor 26 or fan motor 36 set by the control unit 30 according, for example, to a selection made by the user.

The diagrams 56 and 58 of the speed v show a specific pattern. The speed v oscillates around an average speed value. In a similar way, the power course P of diagram 60 oscillates around an average power value.

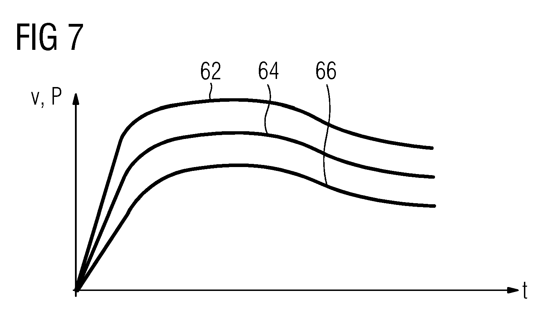

FIG 7 illustrates schematic diagrams 62, 64 and 66 of the speed v and the power P of the fan-drum motor 26 or fan motor 36 as functions of the time t according to a further example the present invention.

The diagram 62 represents the speed v of the fan-drum motor 26 or fan motor 36 in the case of the small amount of load in the laundry drum 12. The diagram 64 represents the speed v of the fan-drum motor 26 or fan motor 36 in the case of the big amount of load in the laundry drum 12. The diagram 66 represents the power course P of the fan-drum motor 26 or fan motor 36 set by the control unit 30 according, for example, to a selection made by the user such as an anti-crease function.

The diagrams 62, 64 and 66 show a continuous course of the speed v and power P, respectively. The speed v and the power P decrease slowly.

Although illustrative embodiments of the present invention have been described herein with reference to the accompanying drawings, it is to be understood that the present invention is not limited to those precise embodiments, and that various other changes and modifications may be affected therein by one skilled in the art without departing from the scope or spirit of the invention. All such changes and modifications are intended to be included within the scope of the invention as defined by the appended claims.

### List of reference numerals

- 10: drying air stream circuit
- 12: laundry drum
- 14: evaporator
- 16: condenser
- 18: drying air stream fan
- 20: refrigerant circuit
- 22: compressor
- 24: expansion device
- 26: fan-drum motor
- 28: control line
- 30: control unit
- 32: air-to-air condenser
- 34: ambient air fan
- 36: fan motor
- 38: fan control line
- 40: drum motor
- 42: drum control line
- 50: diagram of the speed at small amount of load
- 52: diagram of the speed at big amount of load
- 54: diagram of the power of the motor
- 56: diagram of the speed at small amount of load
- 58: diagram of the speed at big amount of load
- 60: diagram of the power of the motor
- 62: diagram of the speed at small amount of load
- 64: diagram of the speed at big amount of load
- 66: diagram of the power of the motor

- v: speed
- P: power
- T: time

## Claims

**1.** A method for controlling a laundry dryer including a fan-drum motor (26) for driving both a drying air stream fan (18) and a laundry drum (12) with a variable speed (v) or a fan motor (36) for driving the drying air stream fan (18) with a variable speed (v) and a separate drum motor (40) for driving the laundry drum (12), said method comprising the steps of:
- setting a predetermined power course for the fan-drum motor (26) or the fan motor (36), respectively, and
- controlling the speed (v) of the fan-drum motor (26) or fan motor (36), so that the absorbed power (P) of the fan-drum motor (26) or fan motor (36), respectively, maintains the set power course.

**2.** The method according to claim 1,
**characterized in that**
the speed (v) of the fan-drum motor (26) or fan motor (36) increases with the decreasing load inside the laundry drum (12) of the laundry dryer.

**3.** The method according to claim 1 or 2,
**characterized in that**
the predetermined power course of the fan-drum motor (26) or the fan motor (36), respectively, depends on at least one selection made by a user.

**4.** The method according to claim 1 or 2,
**characterized in that**
a maximum level for the speed (v) of the fan-drum motor (26) or fan motor (36), respectively, is defined.

**5.** The method according to claim 4,
**characterized in that**
the maximum level for the speed (v) of the fan-drum motor (26) or fan motor (36), respectively, depends on the noise generated by the laundry dryer.

**6.** The method according to claim 4 or 5,
**characterized in that**
the maximum level for the speed (v) of the fan-drum motor (26) or fan motor (36) depends on the flow rate or the drum speed generated by the fan-drum motor (26) or fan motor (36).

**7.** The method according to any one of the preceding claims,
**characterized in that**
the speed (v) of the fan-drum motor (26) or fan motor (36) oscillates around an average speed value, wherein said average speed value corresponds with the set power course.

**8.** The method according to any one of the preceding claims,
**characterized in that**
the method is provided for a laundry dryer with a heat pump system, wherein a rotation speed or power of a compressor (22) of said heat pump system is controlled in dependence of the speed of the fan-drum motor (26) or fan motor (36), respectively.

**9.** The method according to claim 8,
**characterized in that**
the rotation speed or power of the compressor (22) increases with an increasing speed (v) of the fan-drum motor 26 or fan motor (36), respectively.

**10.** A laundry dryer including a drying air stream circuit (10) with a drying air stream fan (18) and a laundry drum (12), wherein:
- the laundry dryer comprises a fan-drum motor (26) for driving both the drying air stream fan (18) and the laundry drum (12) or a fan motor (36) for driving the drying air stream fan (18) and a separate drum motor (40) for driving the laundry drum (12),
- the laundry dryer comprises a control unit (30) for controlling the speed (v) of the fan-drum motor (26) or the fan motor (36), respectively,
- a set or settable power course for the fan-drum motor (26) or the fan motor (36), respectively, is defined,
- the control unit (30) is provided for controlling the speed (v) of the fan-drum motor (26) or the fan motor (36), so that the absorbed power (P) of the fan-drum motor (26) or the fan motor (36), respectively, maintains the set power course.

**11.** The method according to claim 10,
**characterized in that**
the speed (v) of the fan-drum motor (26) or fan motor (36) increases with the decreasing load inside the laundry drum (12) of the laundry dryer.

**12.** The laundry dryer according to claim 10 or 11,
**characterized in that**
the control unit (30) of the laundry dryer is programmed to set a predetermined power course of the fan-drum motor (26) or the fan motor (36), respectively, based on at least one selection made by a user at a control panel

**13.** The laundry dryer according to any one of the claims 10 to 12,
**characterized in that**
the fan-drum motor (26) or the fan motor (36), respectively, is an inverter motor.

**14.** The laundry dryer according to any one of the claims 10 to 13,
**characterized in that**
the laundry dryer comprises a heat pump system, wherein a variable rotation speed and/or power of a compressor (22) is controlled or controllable by the control unit (30).

**14.** The laundry dryer according to any one of the claims 9 to 12,
**characterized in that**
the laundry dryer comprises an air-to-air condenser (32) providing a heat exchange between the drying air stream circuit (10) and ambient air.

**15.** The laundry dryer according to any one of the claims 10 to 14,
**characterized in that**
the laundry dryer is provided for the method according to any one of the claims 1 to 9.
